# EUROPÄISCHE PATENTSCHRIFT

(11) **EP 1 970 390 B1**
(45) Veröffentlichungstag und Bekanntmachung des Hinweises auf die Patenterteilung: **04.05.2016**
(21) Anmeldenummer: 08000716.4
(22) Anmeldetag: 16.01.2008
(51) Int. Cl.: C08G 18/08, C08G 18/70, C08G 18/72, C09D 175/04, C08G 18/10, C08G 18/12, C08J 5/12, C08J 7/04, C09J 175/04

(54) **Neue Vernetzersysteme für wässrige Polymerdispersionen, insbesondere Dispersionsklebstoffe**
New cross-linking systems for aqueous polymer dispersions, in particular dispersion adhesives
Nouveaux systèmes de mise en réseau pour dispersions de polymères aqueuses, en particulier des colles de dispersion

(30) Priorität: 12.03.2007 DE 102007012144; 21.03.2007 DE 102007013451
(43) Veröffentlichungstag der Anmeldung: 17.09.2008
(73) Patentinhaber: Jowat AG, 32758 Detmold (DE)
(72) Erfinder: Guse, Dieter, Dr., 32584 Löhne (DE); Hippold, Theodor, 32108 Bad Salzuflen (DE); Terfloth, Christian, Dr., 32760 Detmold (DE)
(74) Vertreter: Von Rohr Patentanwälte Partnerschaft mbB

(56) Entgegenhaltungen:
- EP-A1- 1 026 186
- EP-A2- 1 923 411
- DE-A1- 10 238 148
- DE-A1-102004 054 446
- DE-A1-102005 056 434
- US-A- 5 703 158

## Beschreibung

Die vorliegende Erfindung betrifft neue Vernetzersysteme (Härtersysteme) für vorzugsweise wäßrige Polymerdispersionen, insbesondere Dispersionsklebstoffe.

Insbesondere betrifft die vorliegende Erfindung ein Zweikomponentensystem (2K-System), insbesondere ein zweikomponentiges Dispersionsklebstoffsystem, aus Polymerdispersion einerseits und reaktiver, insbesondere isocyanatbasierter Vernetzerkomponente (Härterkomponente) für die Polymerdispersion andererseits.

Des weiteren betrifft die vorliegende Erfindung ein Verfahren zur Vernetzung einer Polymerdispersion als Bestandteil eines Zweikomponentensystems (2K-Systems), insbesondere eines zweikomponentigen Dispersionsklebstoffsystems, unter Verwendung einer reaktiven, insbesondere isocyanatbasierten Vernetzerkomponente (Härterkomponente).

Schließlich betrifft die vorliegende Erfindung die Verwendung einer Mischung aus mindestens einem aliphatischen Isocyanat und mindestens einem aromatischen Isocyanat als isocyanatbasierte Vernetzerkomponente (Härterkomponente) für Polymerdispersionen.

Klebstoffe, insbesondere auf Basis physikalisch abbindender bzw. nichtreaktiver Dispersionsklebstoffe (z. B. lösemittelhaltige und/oder wäßrig basierte Kontaktklebstoffe etc., wie z. B. Klebstoffe auf Basis von Polyurethandispersionen und dergleichen) erreichen nach Entfernen des Lösemittels und/oder Wassers nicht immer eine ausreichende Festigkeit bzw. Verklebungsqualität, insbesondere im Hinblick auf Wärmestandfestigkeit und Feuchtigkeitsbeständigkeit. Daher wird diesen Klebstoffen oftmals ein sogenannter Vernetzer - synonym auch als Härter bezeichnet - zugesetzt, welcher zu einer Steigerung der Endfestigkeit der Verklebung führt, insbesondere in bezug auf die Wärmebeständigkeit und die Feuchtigkeitsfestigkeit.

So werden Dispersionen auf Polyurethanbasis seit langem als Klebstoffe, insbesondere bei der Verklebung von thermoplastischen Folien mit Holzwerkstoffen im Vakuumtiefziehverfahren (3D-Verformung), eingesetzt. Wie zuvor geschildert, erreichen aber die reinen Dispersionsklebstoffe ohne den Zusatz eines Vernetzersystems nicht immer eine für die spätere Anwendung ausreichende Beständigkeit, was insbesondere bei Einwirken von höheren Temperaturen bzw. Wärme und von Feuchtigkeit zutrifft.

Zu diesem Zweck werden als Vernetzer im Stand der Technik hydrophilierte aliphatische Isocyanate auf Basis von HDI und IPDI sowie deren Homologe, Urethdione, Dimere und Trimere eingesetzt. Im allgemeinen werden 5 bis 15 Gew.-% dieser Vernetzer zu den Dispersionsklebstoffen zugesetzt, um eine ausreichende Vernetzung zu erreichen. Allerdings handelt es sich bei den hydrophilierten aliphatischen Isocyanaten um vergleichsweise teure Rohstoffe, welche sich zudem ohne Hydrophilierung nicht oder nur unter erschwerten Bedingungen in die Klebstoffdispersionen einarbeiten lassen. Auch sind relativ große Mengen dieser kostenintensiven Vernetzer erforderlich, um eine ausreichende Vernetzung oder Härtung zu bewirken.

Alternativ kommen daher im Stand der Technik auch aromatische Isocyanate als Vernetzer derartiger Dispersionsklebstoffe zum Einsatz, wobei aufgrund der mit den aromatischen Isocyanaten als Vernetzerkomponente verbundenen Nachteilen dieser Alternative eine nur untergeordnete technische Bedeutung zukommt. Aromatische Isocyanate sind zwar preiswerter als aliphatische Isocyanate, können aber aufgrund ihrer hohen Reaktivität und ihrer ungenügenden Hydrophilierung in der Praxis kaum als Vernetzer für wäßrige Polymerdispersionen eingesetzt werden. Insbesondere erfordern die damit verbundenen geringen Topfzeiten (im allgemeinen von nur etwa 30 bis 60 Minuten) für die Verarbeitung spezielle Vorrichtungen und häufig aufwendige Reinigungsarbeiten.

Die DE 102 38 148 A1 betrifft Mischungen, welche (A) ein Isocyanurat bzw. Biuret des 1,6-Diisocyanatohexans (HDI), (B) ein Isocyanurat des 1-Isocyanato-3,5,5-trimethyl-5-isocyanatomethyl-cyclohexans (IPDI), (C) mindestens einen Emulgator auf Basis einer mit Diisocyanaten umgesetzten Komponente und (D) gegebenenfalls Lösungsmittel enthalten.

Weiterhin betrifft die EP 1 923 411 A2 wässrige polyurethan-modifizierte Alkydharzdispersionen, deren Herstellung sowie deren Verwendung als Bindemittel in Lacken und Beschichtungen auf Basis eines Alkydharzes, eines difunktionellen Polyisocyanats, eines Hydrophilierungsmittels, gegebenenfalls von Diolen bzw. Triolen, einem Diamin sowie gegebenenfalls weiteren Komponenten.

Die DE 10 2005 056 434 A1 beschreibt wässrige, Urethangruppen enthaltende, hydroxyfunktionelle Polyester-Dispersionen, ein Verfahren zu deren Herstellung sowie deren Verwendung in Kombination mit Vernetzerharzen zur Herstellung von Lacken, Beschichtungen und Klebstoffen.

Die DE 10 2004 054 446 A1 betrifft Polyesterpolyacrylat-Dispersionen mit niedrigem Lösemittegehalt auf Basis von vinylmonomergepfropften Polyestern sowie lactongruppenhaltigen Reaktivverdünnern, ein Verfahren zu deren Herstellung sowie wässrige Beschichtungsmittel auf deren Basis und deren Verwendung als Lacke.

Die US 5 703 158 A betrifft sulfonierte Polyesterpolyole sowie Mischungen sulfonierter Polyesterpolyole und Hydroxycarbonsäuren, welche eingesetzt werden, um wässrige anionische Polyurethandispersionen mit einer hohen Kristallisierungsrate, einer geringen Hitzeaktivierungstemperatur und einer guten Stabilität bei geringem pH-Wert bereitzustellen.

Weiterhin betrifft die EP 1 026 186 A1 oxidativ trocknende wässrige Polyurethan-Dispersionen auf Basis von trocknenden bzw. halbtrocknenden Ölen sowie ein Verfahren zu deren Herstellung und deren Verwendung zur Lackierung von Holz.

Das der vorliegenden Erfindung zugrundeliegende Problem liegt daher in der Bereitstellung eines Vernetzersystems (Härtersystems), welches die zuvor geschilderten Nachteile des Standes der Technik zumindest weitgehend vermeidet oder aber wenigstens abschwächt.

Die Anmelderin hat nunmehr überraschenderweise herausgefunden, daß die zuvor geschilderte Aufgabenstellung dadurch gelöst werden kann, daß als Vernetzerkomponente bzw. Vernetzersystem ein Gemisch aus aliphatischen und aromatischen Isocyanaten zum Einsatz kommt.

Gegenstand der vorliegenden Erfindung - gemäß einem **ersten** Aspekt der vorliegenden Erfindung - ist somit ein Zweikomponentensystem (2K-System) in Form eines zweikomponentigen Dispersionsklebstoffsystems, wobei das Zweikomponentensystem als getrennt voneinander vorliegende Komponenten (A) und (B)
(A) mindestens eine Polymerdispersion in Mengen von 80 bis 99,9 Gew.-%, bezogen auf das Zweikomponentensystem, einerseits und
(B) eine isocyanatbasierte Vernetzerkomponente (Härterkomponente) in Mengen von 0,1 bis 20 Gew.-%, bezogen auf das Zweikomponentensystem, für die Polymerdispersion andererseits
umfaßt,
wobei die isocyanatbasierte Vernetzerkomponte (B) eine Mischung aus mindestens einem aliphatischen Isocyanat, ausgewählt aus aliphatischen Di- und Polyisocyanaten, und mindestens einem aromatischen Isocyanat, ausgewählt aus aromatischen Di- und Polyisocyanaten, umfaßt, wobei die isocyanatbasierte Vernetzerkomponte (B) aliphatische(s) Isocyanat(e) einerseits und aromatische(s) Isocyanat(e) andererseits in einem Gewichtsverhältnis aliphatische(s) Isocyanat(e) / aromatische(s) Isocyanat(e) im Bereich von 15 : 85 bis 60 : 40 enthält.

Dabei bildet die Komponente (A) eine erste Komponente und die Komponente (B) eine zweite Komponente des erfindungsgemäßen Zweikomponentensystems, wobei die beiden Komponenten getrennt voneinander aufbewahrt und erst vor der Anwendung, insbesondere unmittelbar vor der Anwendung, zusammengebracht und homogenisiert werden.

Auf diese Weise wird ein preiswertes Vernetzersystem zur Verfügung gestellt, welches die oben geschilderten Nachteile des Standes der Technik in effizienter Weise überwindet. Eine solche Vernetzerkomponente läßt sich ohne weiteres in wäßrige Polymerdispersionen einarbeiten und führt zu mindestens gleich guten Verklebungen wie die nach Stand der Technik als Vernetzer eingesetzten hydrophilierten aliphatischen Isocyanate bei deutlich reduzierten Rohstoffkosten, geringeren Vernetzermengen und mindestens gleichen bis sogar verlängerten Topfzeiten.

Das im Rahmen der vorliegenden Erfindung eingesetzte aliphatische Isocyanat ist erfindungsgemäß aus aliphatischen Di- und Polyisocyanaten ausgewählt.

Beispiele für erfindungsgemäß geeignete aliphatische Isocyanate sind Hexamethylendiisocyanat (HDI oder HMDI) und dessen Derivate, Isomere und Oligomere, insbesondere HMDI-Trimere, 1-Isocyanato-3-isocyanatomethyl-3,5,5-trimethylcyclohexan (IPDI) und dessen Derivate, Isomere und Oligomere, insbesondere Di-, Tri- und Polymerisate und IPDI-Isocyanurat (IPDI-T) sowie Mischungen und Prepolymere der zuvor genannten Verbindungen.

In erfindungsgemäß bevorzugter Ausführungsform ist das aliphatische Isocyanat der isocyanatbasierten Vernetzerkomponente (B) ausgewählt aus der Gruppe von HMDI und HMDI-Trimeren.

Im allgemeinen wird als aliphatisches Isocyanat ein wasseremulgierbares, insbesondere hydrophiliertes aliphatisches Isocyanat eingesetzt. Derartige wasseremulgierbare, insbesondere hydrophilierte aliphatische Isocyanate sind kommerziell erhältlich und dem Fachmann als solche bekannt. Dennoch ist die Verwendung hydrophilierter Isocyanate im Rahmen der vorliegenden Erfindung nicht zwingend erforderlich, auch wenn dies eine bevorzugte Ausführungsform darstellt.

Was das aromatische Isocyanat der isocyanatbasieren Vernetzerkomponente (B) anbelangt, so ist dieses erfindungsgemäß ausgewählt aus aromatischen Di- und Polyisocyanaten.

Beispiele für im Rahmen der vorliegenden Erfindung einsetzbare aromatische Isocyanate sind Diisocyanatodiphenylmethane (MDIs) und deren Derivate, Isomere und Oligomere, insbesondere 4,4'-Diisocyanatodiphenylmethan (4,4'-MDI) und 2,4'-Diisocyanatodiphenylmethan (2,4'-MDI) sowie Mischungen verschiedener Diisocyanatodiphenylmethanisomere, 1,5-Diisocyanatonaphthalin (NDI), Diisocyanatotoluole (TDIs) und dessen Derivate, Isomere und Oligomere, insbesondere 2,4-Diisocyanatotoluol und TDI-Urethdione, insbesondere dimeres 1-Methyl-2,4-phenylen-diisocyanat (TDI-U), und TDI-Harnstoffe, 3,3'-Dimethylbiphenyl-4,4'-diisocyanat (TODI), 3,3'-Diisocyanato-4,4'-dimethyl-N,N'-diphenylharnstoff (TDIH) sowie Mischungen und Prepolymere der zuvor genannten Verbindungen.

In erfindungsgemäß bevorzugter Weise ist das aromatische Isocyanat der isocyanatbasierten Vernetzerkomponente (Härterkomponente) (B) ausgewählt aus MDIs und Mischungen verschiedener MDI-Isomere.

In erfindungsgemäß besonders bevorzugter Weise wird als aromatisches Isocyanat der isocyanatbasierten Vernetzerkomponente (B) eine Mischung aus verschiedenen MDI-Isomeren, insbesondere eine Mischung aus 4,4'-Diisocyanatodiphenylmethan und 2,4'-Diisocyanatodiphenylmethan, eingesetzt, vorzugsweise mit einem Gehalt an 2,4'-Diisocyanatodiphenylmethan von mindestens 10 Gew.-%, insbesondere mindestens 20 Gew.-%, bevorzugt mindestens 30 Gew.-%, besonders bevorzugt mindestens 40 Gew.-%, bezogen auf das MDI-Isomerengemisch. Die Verwendung eines derartigen Isomerengemisches hat den entscheidenden Vorteil, daß das in dem Isomerengemisch vorhandene 2,4'-Diisocyanatodiphenylmethan eine in 2-Position des Phenylrests befindliche NCO-Gruppe aufweist, welche - im Gegensatz zu der NCO-Gruppe in 4'-Position - relativ reaktionsträge ist und folglich über einen längeren Zeitraum stabil vorhanden ist, so daß auf diese Weise die Topfzeit verlängert werden kann.

In erfindungsgemäß bevorzugter Weise umfaßt die isocyanatbasierte Vernetzerkomponente (B) HMDI oder dessen Derivate oder IPDI, vorzugsweise HDMI oder dessen Derivate, als aliphatisches Isocyanat einerseits und mindestens ein MDI, vorzugsweise ein Gemisch aus 4,4'-MDI und 2,4'-MDI, als aromatisches Isocyanat andererseits.

Was die Menge der isocyanatbasierten Vernetzerkomponente (B) in dem erfindungsgemäßen Zweikomponentensystem anbelangt, so kann diese in weiten Bereichen variieren. Erfindungsgemäß enthält das erfindungsgemäße Zweikomponentensystem die isocyanatbasierte Vernetzerkomponente (B) in Mengen von 0,1 bis 20 Gew.-%, insbesondere 1 bis 15 Gew.-%, bevorzugt 1 bis 10 Gew.-%, besonders bevorzugt 2 bis 7,5 Gew.-%, bezogen auf das Zweikomponentensystem.

Besonders gute Ergebnisse werden erhalten, wenn die isocyanatbasierte Vernetzerkomponente (B) aliphatische(s) Isocyanat(e) einerseits und aromatische(s) Isocyanat(e) andererseits in einem Gewichtsverhältnis aliphatische(s) Isocyanat(e) / aromatische(s) Isocyanat(e) im Bereich von 15 : 85 bis 60 : 40, besonders bevorzugt 20 : 80 bis 50 : 50, enthält.

Gemäß einer besonders bevorzugten Ausführungsform beträgt das Gewichtsverhältnis aliphatische(s) Isocyanat(e) / aromatische(s) Isocyanat(e) höchstens 1,5, vorzugsweise höchstens 1.

Erfindungsgemäß handelt es sich bei dem erfindungsgemäßen Zweikomponentensystem um ein zweikomponentiges Dispersionsklebstoffsystem, insbesondere um ein wäßrig basiertes zweikomponentiges Dispersionsklebstoffsystem.

Die Polymerdispersion (A) des erfindungsgemäßen Zweikomponentensystems ist im allgemeinen eine wäßrig basierte Kunststoffdispersion oder eine Mischung verschiedener wäßrig basierter Kunststoffdispersionen.

Üblicherweise ist die Polymerdispersion (A) ausgewählt aus der Gruppe von Polyurethandispersionen, Acrylatdispersionen, Chloroprendispersionen, Epoxidharzdispersionen, Ethylenvinylacetatdispersionen (EVA-Dispersionen) und Polyvinylacetatdispersionen (PVAc-Dispersionen) sowie Mischungen aus zwei oder mehreren der vorgenannten Dispersionen.

In erfindungsgemäß bevorzugter Weise wird als Polymerdispersion (A) eine insbesondere wäßrig basierte Polyurethandispersion eingesetzt. Besonders bevorzugt werden Polyurethane mit reaktiven, insbesondere isocyanatreaktiven Gruppen eingesetzt, beispielsweise Urethangruppen mit sekundären Aminofunktionen, säureterminierte bzw. carboxylierte Urethane und dergleichen.

Was die Menge an der Polymerdispersion (A) in dem erfindungsgemäßen Zweikomponentensystem anbelangt, so kann auch diese in weiten Bereichen variieren. Erfindungsgemäß enthält das Zweikomponentensystem die Polymerdispersion (A) in Mengen von 80 bis 99,9 Gew.-%, insbesondere 85 bis 99 Gew.-%, bevorzugt 90 bis 99 Gew.-%, besonders bevorzugt 92,5 bis 98 Gew.-%, bezogen auf das Zweikomponentensystem.

Es versteht sich für den Fachmann von selbst, daß die prozentualen Mengen aller Bestandteile bzw. Inhaltsstoffe des erfindungsgemäßen 2K-Systems stets so miteinander zu kombinieren sind, daß sie in Summe 100 % ergeben.

Darüber hinaus können das erfindungsgemäße Zweikomponentensystem bzw. die Polymerdispersion (A) außerdem mindestens ein Additiv enthalten. Beispiele für erfindungsgemäß geeignete Additive sind Emulgatoren, Dispergiermittel, Lösemittel, Stabilisatoren, Verdicker, Schutzkolloide, Verarbeitungshilfsmittel und dergleichen sowie Mischungen dieser Verbindungen.

Mit dem neuen Vernetzersystem auf Basis eines Gemisches aus aliphatischen Isocyanaten einerseits und aromatischen Isocyanaten andererseits wird ein für die Praxis hochrelevantes, leistungsstarkes Zweikomponentensystem in Form eines zweikomponentigen Dispersionsklebstoffsystems bereitgestellt, welches die eingangs geschilderten Nachteile des Standes der Technik in effizienter Weise löst. Insbesondere läßt sich die erfindungsgemäße Vernetzerkomponente (B) ohne weiteres in Polymerdispersionen, insbesondere wäßrige Polymerdispersionen, einarbeiten und führt zu mindestens gleich guten Verklebungen wie im Falle der Verwendung herkömmlicher Vernetzer auf der Basis hydrophilierter aliphatischer Isocyanate - und dies bei deutlich reduzierten Rohstoffkosten, geringeren Mengen an Vernetzer und mindestens gleich guten bis sogar im allgemeinen längeren Topfzeiten.

Überraschenderweise wurde somit gefunden, daß sich Abmischungen von aliphatischen Isocyanaten mit aromatischen Isocyanaten, letztere insbesondere in Form spezieller Monomergemische von aromatischen Isocyanaten, wie insbesondere Gemischen aus 2,4'-MDI-Isomeren und 4,4'-MDI-Isomeren, vorzugsweise mit hohem 2,4'-MDI-Anteil, leicht in wäßrige Klebstoffdispersionen einarbeiten lassen. Diese Vernetzersysteme zeigen sogar eine längere Topfzeit als die nach dem Stand der Technik eingesetzten reinen aliphatischen Isocyanate. Weiterhin wurde eine zum Stand der Technik gleichwertige Verklebungsqualität erreicht, und zwar bei deutlich reduzierten Rohstoffkosten und geringeren Vernetzermengen.

Das erfindungsgemäße Zweikomponentensystem eignet sich insbesondere zum Auftrag im Spritzverfahren. Insbesondere kann das erfindungsgemäße Zweikomponentensystem in bezug auf Holzwerkstoffe, insbesondere Holzsubstrate, verwendet werden, beispielsweise zur Verklebung von Folien, insbesondere thermoplastischen Folien mit Holzwerkstoffen, insbesondere im Vakuumtiefziehverfahren (3D-Verformung). Dies ist aber lediglich ein typisches Anwendungsbeispiel für das erfindungsgemäße Zweikomponentensystem, auf welches das erfindungsgemäße Zweikomponentensystem keinesfalls beschränkt ist.

Der erfindungsgemäße 2K-Klebstoff wird typischerweise im Spritzverfahren aufgetragen. Dazu wird z. B. der Holzwerkstoff (z. B. MDF = Medium Density Fiberboard bzw. mitteldichte Faserplatte) mit dem wäßrigen Klebstoffsystem beschichtet und bei Raumtemperatur oder leicht erhöhter Temperatur abgetrocknet. Nach der Abtrocknung ist der Klebstoff blockfrei, und das so vorbehandelte Substrat kann in einer beheizten Presse unter Anwendung von Druck und Vakuum mit einer thermoplastischen Folie kaschiert werden.

Weiterer Gegenstand der vorliegenden Erfindung - gemäß einem **zweiten** Aspekt der vorliegenden Erfindung - ist somit die erfindungsgemäße Verwendung des Zweikomponentensystems nach der vorliegenden Erfindung. Insbesondere eignet sich das Zweikomponentensystem nach der vorliegenden Erfindung - wie zuvor geschildert - zur Verwendung in der Holz - und Möbelindustrie. Beispielsweise kann das erfindungsgemäße Zweikomponentensystem zur Folienkaschierung auf Substraten, insbesondere zur Kaschierung von thermoplastischen Folien auf Holzwerkstoffen, vorzugsweise im Vakuumtiefziehverfahren (3D-Verformung), eingesetzt werden. Weiterhin kann das erfindungsgemäße Zweikomponentensystem auch in der Automobilindustrie Anwendung finden, so z. B. zum Verkleben von Türseitenteilen. Wie zuvor geschildert, ermöglicht das Zweikomponentensystem nach der vorliegenden Erfindung insbesondere eine einfache Anwendung bzw. einen einfach zu realisierenden Auftrag im Spritz-, Walz-, Gieß- oder Tauchverfahren, vorzugsweise im Spritzverfahren. Es versteht sich für den Fachmann von selbst, daß die beiden Komponenten (A) und (B) des erfindungsgemäßen 2K-Systems zu Zwecken der Anwendung in Abhängigkeit von der Topfzeit erst vor der Anwendung in Kontakt gebracht bzw. homogen vermischt werden und dann die fertige, homogene Mischung aus den Komponenten (A) und (B) nachfolgend appliziert wird.

Für weitergehende Einzelheiten in bezug auf die erfindungsgemäße Verwendung kann auf die vorstehenden Ausführungen zu dem erfindungsgemäßen Zweikomponentensystem als solchem verwiesen werden, welche in bezug auf das erfindungsgemäße Verfahren entsprechend gelten.

Weiterer Gegenstand der vorliegenden Erfindung - gemäß einem **dritten** Aspekt der vorliegenden Erfindung - ist ein Verfahren zur Vernetzung einer Polymerdispersion als Bestandteil eines Zweikomponentensystems (2K-System) in Form eines zweikomponentigen Dispersionsklebstoffsystems, wobei der Polymerdispersion eine isocyanatbasierte Vernetzerkomponente (Härterkomponente) zugesetzt wird, wobei die Polymerdispersion in Mengen von 80 bis 99,9 Gew.-%, bezogen auf das Zweikomponentensystem, und die isocyanatbasierte Vernetzerkomponente (Härterkomponente) in Mengen von 0,1 bis 20 Gew.-%, bezogen auf das Zweikomponentensystem, eingesetzt werden, wobei als isocyanatbasierte Vernetzerkomponte eine Mischung aus mindestens einem aliphatischen Isocyanat, ausgewählt aus aliphatischen Di- und Polyisocyanaten, und mindestens einem aromatischen Isocyanat, ausgewählt aus aromatischen Di- und Polyisocyanaten, eingesetzt wird, wobei die isocyanatbasierte Vernetzerkomponte (B) aliphatische(s) Isocyanat(e) einerseits und aromatische(s) Isocyanat(e) andererseits in einem Gewichtsverhältnis aliphatische(s) Isocyanat(e) / aromatische(s) Isocyanat(e) im Bereich von 15 : 85 bis 60 : 40 enthält.

Für weitergehende Einzelheiten in bezug auf das erfindungsgemäße Verfahren kann auf die vorstehenden Ausführungen zu dem erfindungsgemäßen Zweikomponentensystem und der erfindungsgemäßen Verwendung verwiesen werden, welche in bezug auf das erfindungsgemäße Verfahren entsprechend gelten.

Schließlich ist weiterer Gegenstand der vorliegenden Erfindung - gemäß einem **vierten** Aspekt der vorliegenden Erfindung - die Verwendung einer Mischung aus mindestens einem aliphatischen Isocyanat und mindestens einem aromatischen Isocyanat als isocyanatbasierte Vernetzerkomponente (Härterkomponente) für eine Polymerdispersion im Rahmen eines Zweikomponentensystems (2K-System) in Form eines zweikomponentigen Dispersionsklebstoffsystems, insbesondere zur Steigerung der Endfestigkeit der Verklebung, insbesondere in bezug auf die Wärmebeständigkeit und/oder die Feuchtigkeitsfestigkeit, wobei das Zweikomponentensystem als getrennt voneinander vorliegende Komponenten (A) und (B)
(A) mindestens eine Polymerdispersion in Mengen von 80 bis 99,9 Gew.-%, bezogen auf das Zweikomponentensystem, einerseits und
(B) eine isocyanatbasierte Vernetzerkomponente (Härterkomponente) in Mengen von 0,1 bis 20 Gew.-%, bezogen auf das Zweikomponentensystem, für die Polymerdispersion andererseits
umfaßt,
wobei die isocyanatbasierte Vernetzerkomponte (B) eine Mischung aus mindestens einem aliphatischen Isocyanat, ausgewählt aus aliphatischen Di- und Polyisocyanaten, und mindestens einem aromatischen Isocyanat, ausgewählt aus aromatischen Di- und Polyisocyanaten, umfaßt, wobei die isocyanatbasierte Vernetzerkomponte (B) aliphatische(s) Isocyanat(e) einerseits und aromatische(s) Isocyanat(e) andererseits in einem Gewichtsverhältnis aliphatische(s) Isocyanat(e) / aromatische(s) Isocyanat(e) im Bereich von 15 : 85 bis 60 : 40 enthält.

Weitere Ausgestaltungen, Abwandlungen und Variationen der vorliegenden Erfindung sind für den Fachmann beim Lesen der Beschreibung ohne weiteres erkennbar und realisierbar, ohne daß er dabei den Rahmen der vorliegenden Erfindung verläßt.

Die vorliegende Erfindung wird anhand der nachfolgenden Ausführungsbeispiele veranschaulicht, welche die vorliegende Erfindung jedoch keinesfalls beschränken.

### AUSFÜHRUNGSBEISPIELE

### Herstellung von zweikomponentigen wäßrigen Dispersionsklebstoffen

Ein Polyurethan-Klebstoffsystem wurde unter Rühren mit 2,5 bzw. 5 Gew.-% eines Isocyanatvernetzers gemischt. Nach Abschluß der Zugabe wurde noch weitere 5 Minuten gerührt. Die so hergestellte Mischung war gebrauchsfertig.

Es wurden folgende Ansätze hergestellt (siehe Tabelle 1):

**Tabelle 1:**

| | Referenz 1 | PU 1 | PU 2 | PU 3 | PU 4 | PU 5 | PU 6 |
|---|---|---|---|---|---|---|---|
| | | | | | | | |
| Polyurethandispersion Jowapur^{®} 150.30 | 100 | 100 | 100 | 100 | 100 | 100 | 100 |
| | | | | | | | |
| aliphatisches NCO | 5 | | | | | | |
| 2,4'-4,4'-MDI / aliphatisches NCO (50/50) | | 2,5 | 5 | | | | |
| 2,4'-4,4'-MDI / aliphatisches NCO (80/20) | | | | 2,5 | 5 | | |
| 2,4'-4,4'-MDI | | | | | | 2,5 | |
| 4,4'-MDI in Aceton (50%ig) | | | | | | | 2,5 |
| | | | | | | | |
| Viskosität (Brookfield, 20 °C, RVT, Spindel 2, 20 Umdrehunge n) [mPas] | 990 | 735 | 660 | 900 | 875 | 1155 | 730 |

Die Topfzeiten der Mischungen verhielten sich wie aus Tabelle 2 ersichtlich. Jowapur^{®} 150.30 ist eine kommerziell erhältliche Polyurethandispersion der Jowat AG, Detmold. Bei der Vernetzerkomponente handelt es sich um ein kommerziell erhältliches, hydrophiliertes aliphatisches Polyisocyanat auf HDI-Basis. Es ist zu erkennen, daß Abmischungen von aliphatischen Isocyanaten mit 2,4'-4,4'-isomerenreichen MDI (PU 1 bis PU 4) eine stabilere Viskosität zeigen und folglich eine deutlich verlängerte Topfzeit gegenüber der Referenz 1 und den rein aromatischen Isocyanaten (PU 5 und PU 6).

**Tabelle 2:**

| | Viskosität nach Brookfield [mPas] | | | | | | |
|---|---|---|---|---|---|---|---|
| Topfzeit | Referenz 1 | PU 1 | PU 2 | PU 3 | PU 4 | PU 5 | PU 6 |
| | | | | | | | |
| 1h | 990 | 735 | 660 | 900 | 875 | 1155 | 730 |
| 2h | 1025 | 660 | 685 | 775 | 940 | 1120 | 720 |
| 3h | 1030 | 665 | 720 | 770 | 980 | 975 | 720 |
| 4h | 1030 | 665 | 730 | 800 | 1100 | 885 | 720 |
| 5h | 1040 | 690 | 745 | 840 | 1050 | 915 | 720 |
| 6h | 1030 | 700 | 745 | 845 | 1075 | 915 | 720 |
| 24h | 840 | 750 | 770 | 920 | 1180 | 1075 | 710 |
| 72h | 13120 | 765 | 975 | 855 | 1165 | 1165 Bodensatz | 745 |
| 120h | fest | 800 | 1010 | 930 | 1180 | 1200 Bodensatz | 800 Bodensatz |

Die Mischungen gemäß Referenz 1 sowie PU 1 bis PU 5 wurden mit einer Handspritzpistole auf MDF-Träger aufgetragen und das Spritzbild, der Verlauf und die Oberflächenruhe optisch beurteilt (siehe Tabelle 3). Alle Ansätze zeigten einen guten Verlauf und eine ruhige Oberfläche.

Nach Abtrocknung bei Raumtemperatur wurden die Prüfkörper mit einer geprimerten PVC-Folie in einer Tiefziehpresse (ITAL-Press) bei einer Klebstoffugentemperatur zwischen 73 bis 75 °C einer 3D-Kaschierung unterworfen. Nach einer Vernetzungszeit von 7 Tagen bei 20 °C und 65 % relativer Feuchte wurden die Prüfkörper den anwendungstechnischen Prüfungen unterzogen. Dazu zählen der aufsteigende Wärmetest nach interner Norm (vgl. nachfolgende Beschreibung), der Test nach AMK (= Arbeitskreis "Die moderne Küche e.V.") sowie die Bestimmung der Schälfestigkeit der PVC-Folie im Kantenbereich des MDF-Trägers.

Die Mischungen PU 1 bis PU 4 zeigten vergleichbare Wärmestandfestigkeiten und Schälfestigkeiten im Vergleich zum Stand der Technik (Referenz 1). Der rein aromatische Vernetzer PU 5 zeigte geringe Wärmestand- und Schälfestigkeiten.

**Tabelle 3:**

| | Referenz 1 | PU 1 | PU 2 | PU 3 | PU 4 | PU 5 |
|---|---|---|---|---|---|---|
| Spritzbild / Verlauf | gut | gut | gut | gut | gut | gut |
| | | | | | | |
| Trocknung 1h RT; Presse: | ITAL-Press; | Aktivierungstemp. | | in der Klebstoffuge: | 73 | 3-75 °C |
| Aufsteigende Wärmestandfestigkeit | 90 | 90 | 90 | 85 | 90 | 80 |
| | | | | | | |
| AMK-Test | | | | | | |
| 1h 50 °C Folienschrumpf [mm] | kein | kein | kein | kein | kein | kein |
| 1h 60 °C Folienschrumpf [mm] | kein | kein | kein | kein | kein | kein |
| 1h 75 °C Folienschrumpf [mm] | kein | kein | kein | kein | kein | 0,1 |
| 2h 75 °C Folienschrumpf [mm] | kein | kein | kein | kein | kein | 0,1 |
| 3h 75 °C Folienschrumpf [mm] | kein | kein | kein | 0,1 | 0,1 | 0,2 |
| 4h 75 °C Folienschrumpf [mm] | kein | 0,1 | kein | 0,1 | 0,2 | 0,5 |
| | | | | | | |
| Schälfestigkeiten (Mittelwerte) [N/cm] | 23,0 | 22,5 | 28,0 | 23,9 | 24,7 | 21,6 |
| | | | | | | |
| Schälfestigkeiten (Maximalwerte) [N/cm] | 45,3 | 42,4 | 54,0 | 44,5 | 45,9 | 39,6 |
| | | | | | | |
| Bruchbild | KB/AB | AB-Folie | MB-Folie | Spanausriß | AB-Folie | AB-Folie |

| | | | | | | |
|---|---|---|---|---|---|---|
| AB: Adhäsionsbruch KB: Kohäsionsbruch MB: Materialbruch | | | | | | |

Durch Abmischungen von hydrophilierten aliphatischen Isocyanaten mit aromatischen Isocyanaten (hier: aromatische Isocyanate auf Basis von 2,4'-4,4'-reichem MDI) stehen dem Anwender preiswerte, wasseremulgierbare Vernetzer zur Verfügung, die bereits bei einer Einsatzkonzentration von 2,5 % statt der üblichen 5 % eine gleichwertige Verklebungsqualität im Vergleich mit den sonst eingesetzten reinen hydrophilierten, aliphatischen Isocyanaten erzielen. Mischungen von hydropilierten aliphatischen Isocyanaten mit aromatischen Isocyanaten (z. B. aromatischen Isocyanatgemischen auf Basis von 2,4'-4,4'-reichem MDI) eigen sich somit in ausgezeichneter Weise als wasseremulgierbare Vernetzer für wäßrige Dispersionsklebstoffe.

### Aufsteigender Wärmetest PU-Dispersionen nach interner Norm

| | |
|---|---|
| Material: | Buchenholz-Sperrholzbretter 7,5 x 30 cm |
| | PVC-Folie 0,4 mm / ca. 8 x 35 cm |
| | Kasten-Rakel mit 120 µm |
| Geräte: | Presse Schwabenthan |
| | Einstellung der Presse: |
| | Obere Heizplatte: kalt |
| | Untere Heizplatte: z. B. 75 °C |
| | Kontrolle der gewünschten Fugentemperatur mit Temperaturmeßstreifen |
| | Druck: niedrigste Einstellung |
| | Preßzeit: 3 Minuten |
| Durchführung: | 120 µm Naßfilm auf Buchenholz-Sperrholzbretter aufziehen Trocknungszeit: 1 Stunde |
| | Bretter auf Schmalseiten mit Klebeband abkleben, um Holzbruch zu vermeiden |
| | Folienstreifen mit geprimerter Seite auf mit Klebstoff beschichtete Seite legen; Brett in die Presse mit Folie auf beheizte Platte legen |
| | Aus einem Brett 2 Prüflinge (2 cm breit) schneiden lassen |
| | Prüflinge 7 Tage bei 20 °C und 65 % relativer Feuchte konditionieren |
| | Prüflänge von 10 cm von jeder Seite ausgehend markieren Belastung: 1 kg |
| Aufsteigender Wärmetest: | Beginn: 40 °C |
| | Stündlich die Temperatur des Trockenschrankes um 10 °C erhöhen |
| | Vor Temperaturerhöhung abgelösten PVC-Streifen messen |
| | Angegeben wird die Temperatur, bei der sich der PVC-Streifen noch nicht abgelöst hat |

## Patentansprüche

1. Zweikomponentensystem (2K-System) in Form eines zweikomponentigen Dispersionsklebstoffsystems, wobei das Zweikomponentensystem als getrennt voneinander vorliegende Komponenten (A) und (B)
(A) mindestens eine Polymerdispersion in Mengen von 80 bis 99,9 Gew.-%, bezogen auf das Zweikomponentensystem, einerseits und
(B) eine isocyanatbasierte Vernetzerkomponente (Härterkomponente) in Mengen von 0,1 bis 20 Gew.-%, bezogen auf das Zweikomponentensystem, für die Polymerdispersion andererseits
umfaßt,
wobei die isocyanatbasierte Vernetzerkomponte (B) eine Mischung aus mindestens einem aliphatischen Isocyanat, ausgewählt aus aliphatischen Di- und Polyisocyanaten, und mindestens einem aromatischen Isocyanat, ausgewählt aus aromatischen Di- und Polyisocyanaten, umfaßt, wobei die isocyanatbasierte Vernetzerkomponte (B) aliphatische(s) Isocyanat(e) einerseits und aromatische(s) Isocyanat(e) andererseits in einem Gewichtsverhältnis aliphatische(s) Isocyanat(e) / aromatische(s) Isocyanat(e) im Bereich von 15 : 85 bis 60 : 40 enthält.

2. Zweikomponentensystem nach Anspruch 1, **dadurch gekennzeichnet, daß** das aliphatische Isocyanat ausgewählt ist aus der Gruppe von Hexamethylendiisocyanat (HDI oder HMDI) und dessen Derivaten, Isomeren und Oligomomeren, insbesondere HMDI-Trimeren; 1-Isocyanato-3-isocyanato-methyl-3,5,5-trimethylcyclohexan (IPDI) und dessen Derivaten, Isomeren und Oligomeren, insbesondere Di-, Tri- und Polymerisaten und IPDI-Isocyanurat (IPDI-T); sowie Mischungen und Prepolymeren der zuvor genannten Verbindungen, besonders bevorzugt aus der Gruppe von HMDI und HMDI-Trimeren.

3. Zweikomponentensystem nach einem oder mehreren der vorangehenden Ansprüche, **dadurch gekennzeichnet, daß** das aliphatische Isocyanat hydrophiliert ist und/oder daß das aliphatische Isocyanat wasseremulgierbar ausgebildet ist.

4. Zweikomponentensystem nach einem oder mehreren der vorangehenden Ansprüche, **dadurch gekennzeichnet, daß** das aromatische Isocyanat ausgewählt ist aus der Gruppe von Diisocyanatodiphenylmethanen (MDIs) und deren Derivaten, Isomeren und Oligomeren, insbesondere 4,4'-Diisocyanatodiphenylmethan (4,4'-MDI) und 2,4'-Diisocyanatodiphenylmethan (2,4'-MDI) sowie Mischungen verschiedener Diisocyanatodiphenylmethanisomere; 1,5-Diisocyanatonaphthalin (NDI); Diisocyanatotoluolen (TDIs) und dessen Derivaten, Isomeren und Oligomeren, insbesondere 2,4-Diisocyanatotoluol und TDI-Urethdionen, insbesondere dimerem 1-Methyl-2,4-phenylen-diisocyanat (TDI-U), und TDI-Harnstoffen; 3,3'-Dimethylbiphenyl-4,4'-diisocyanat (TODI); 3,3'-Diisocyanato-4,4'-dimethyl-N,N'-diphenylharnstoff (TDIH); sowie Mischungen und Prepolymeren der zuvor genannten Verbindungen, besonders bevorzugt aus der Gruppe von MDIs und Mischungen verschiedener MDI-Isomere.

5. Zweikomponentensystem nach einem oder mehreren der vorangehenden Ansprüche, **dadurch gekennzeichnet, daß** das aromatische Isocyanat ein Gemisch aus verschiedenen MDI-Isomeren, insbesondere ein Gemisch aus 4,4'-Diisocyanatodiphenylmethan und 2,4'-Diisocyanatodiphenylmethan, ist, vorzugsweise mit einem Gehalt an 2,4'-Diisocyanatodiphenylmethan von mindestens 10 Gew.-%, insbesondere mindestens 20 Gew.-%, bevorzugt mindestens 30 Gew.-%, besonders bevorzugt mindestens 40 Gew.-%, bezogen auf das MDI-Isomerengemisch.

6. Zweikomponentensystem nach einem oder mehreren der vorangehenden Ansprüche, **dadurch gekennzeichnet, daß** die isocyanatbasierte Vernetzerkomponte (B) HMDI oder dessen Derivate oder IPDI, vorzugsweise HMDI oder dessen Derivate, als aliphatisches Isocyanat einerseits und mindestens ein MDI, vorzugsweise ein Gemisch aus 4,4'-MDI und 2,4'-MDI, als aromatisches Isocyanat andererseits umfaßt.

7. Zweikomponentensystem nach einem oder mehreren der vorangehenden Ansprüche, **dadurch gekennzeichnet, daß** das Zweikomponentensystem die isocyanatbasierte Vernetzerkomponte (B) in Mengen von 1 bis 15 Gew.-%, bevorzugt 1 bis 10 Gew.-%, besonders bevorzugt 2 bis 7,5 Gew.-%, bezogen auf das Zweikomponentensystem, enthält und/oder daß die isocyanatbasierte Vernetzerkomponte (B) aliphatische(s) Isocyanat(e) einerseits und aromatische(s) Isocyanat(e) andererseits in einem Gewichtsverhältnis aliphatische(s) Isocyanat(e) / aromatische(s) Isocyanat(e) im Bereich von 20 : 80 bis 50 : 50 enthält.

8. Zweikomponentensystem nach einem oder mehreren der vorangehenden Ansprüche, **dadurch gekennzeichnet, daß** das Gewichtsverhältnis aliphatische(s) Isocyanat(e) / aromatische(s) Isocyanat(e) höchstens 1,5, vorzugsweise höchstens 1, beträgt.

9. Zweikomponentensystem nach einem oder mehreren der vorangehenden Ansprüche, **dadurch gekennzeichnet, daß** das Zweikomponentensystem ein wäßrig basiertes zweikomponentiges Dispersionsklebstoffsystem ist.

10. Zweikomponentensystem nach einem oder mehreren der vorangehenden Ansprüche, **dadurch gekennzeichnet, daß** die Polymerdispersion (A) eine wäßrig basierte Kunststoffdispersion oder eine Mischung verschiedener wäßrig basierter Kunststoffdispersionen ist und/oder daß die Polymerdispersion (A) ausgewählt ist aus der Gruppe von Polyurethandispersionen, Acrylatdispersionen, Chloroprendispersionen, Epoxidharzdispersionen, Ethylenvinylacetatdispersionen (EVA-Dispersionen) und Polyvinylacetatdispersionen (PVAc-Dispersionen) sowie Mischungen aus zwei oder mehreren der vorgenannten Dispersionen und vorzugsweise eine insbesondere wäßrig basierte Polyurethandispersion ist.

11. Zweikomponentensystem nach einem oder mehreren der vorangehenden Ansprüche, **dadurch gekennzeichnet, daß** das Zweikomponentensystem die Polymerdispersion (A) in Mengen von 85 bis 99 Gew.-%, bevorzugt 90 bis 99 Gew.-%, besonders bevorzugt 92,5 bis 98 Gew.-%, bezogen auf das Zweikomponentensystem, enthält.

12. Zweikomponentensystem nach einem oder mehreren der vorangehenden Ansprüche, **dadurch gekennzeichnet, daß** das Zweikomponentensystem und/oder die Polymerdispersion (A) außerdem mindestens ein Additiv enthält, insbesondere ausgewählt aus der Gruppe von Emulgatoren, Dispergiermitteln, Lösemitteln, Stabilisatoren, Verdickern, Schutzkolloiden, Verarbeitungshilfsmitteln und deren Mischungen.

13. Verwendung eines Zweikomponentensystems nach einem oder mehreren der vorangehenden Ansprüche in der Holz- und Möbelindustrie oder in der Automobilindustrie.

14. Verwendung eines Zweikomponentensystems nach einem oder mehreren der vorangehenden Ansprüche zur Folienkaschierung auf Substraten, insbesondere zur Kaschierung von thermoplastischen Folien auf Holzwerkstoffen, vorzugsweise im Vakuumtiefziehverfahren (3D-Verformung).

15. Verwendung eines Zweikomponentensystems nach einem oder mehreren der vorangehenden Ansprüche zur Anwendung im Spritz-, Walz-, Gieß- oder Tauchverfahren, vorzugsweise im Spritzverfahren.

16. Verfahren zur Vernetzung einer Polymerdispersion als Bestandteil eines Zweikomponentensystems (2K-System) in Form eines zweikomponentigen Dispersionsklebstoffsystems, wobei der Polymerdispersion eine isocyanatbasierte Vernetzerkomponente (Härterkomponente) zugesetzt wird, wobei die Polymerdispersion in Mengen von 80 bis 99,9 Gew.-%, bezogen auf das Zweikomponentensystem, und die isocyanatbasierte Vernetzerkomponente (Härterkomponente) in Mengen von 0,1 bis 20 Gew.-%, bezogen auf das Zweikomponentensystem, eingesetzt werden, wobei als isocyanatbasierte Vernetzerkomponte eine Mischung aus mindestens einem aliphatischen Isocyanat, ausgewählt aus aliphatischen Di-und Polyisocyanaten, und mindestens einem aromatischen Isocyanat, ausgewählt aus aromatischen Di- und Polyisocyanaten, eingesetzt wird, wobei die isocyanatbasierte Vernetzerkomponte (B) aliphatische(s) Isocyanat(e) einerseits und aromatische(s) Isocyanat(e) andererseits in einem Gewichtsverhältnis aliphatische(s) Isocyanat(e) / aromatische(s) Isocyanat(e) im Bereich von 15 : 85 bis 60 : 40 enthält.

17. Verwendung einer Mischung aus mindestens einem aliphatischen Isocyanat und mindestens einem aromatischen Isocyanat als isocyanatbasierte Vernetzerkomponente (Härterkomponente) für eine Polymerdispersion im Rahmen eines Zweikomponentensystems (2K-System) in Form eines zweikomponentigen Dispersionsklebstoffsystems, insbesondere zur Steigerung der Endfestigkeit der Verklebung, insbesondere in bezug auf die Wärmebeständigkeit und/oder die Feuchtigkeitsfestigkeit, wobei das Zweikomponentensystem als getrennt voneinander vorliegende Komponenten (A) und (B)
(A) mindestens eine Polymerdispersion in Mengen von 80 bis 99,9 Gew.-%, bezogen auf das Zweikomponentensystem, einerseits und
(B) eine isocyanatbasierte Vernetzerkomponente (Härterkomponente) in Mengen von 0,1 bis 20 Gew.-%, bezogen auf das Zweikomponentensystem, für die Polymerdispersion andererseits
umfaßt,
wobei die isocyanatbasierte Vernetzerkomponte (B) eine Mischung aus mindestens einem aliphatischen Isocyanat, ausgewählt aus aliphatischen Di- und Polyisocyanaten, und mindestens einem aromatischen Isocyanat, ausgewählt aus aromatischen Di- und Polyisocyanaten, umfaßt, wobei die isocyanatbasierte Vernetzerkomponte (B) aliphatische(s) Isocyanat(e) einerseits und aromatische(s) Isocyanat(e) andererseits in einem Gewichtsverhältnis aliphatische(s) Isocyanat(e) / aromatische(s) Isocyanat(e) im Bereich von 15 : 85 bis 60 : 40 enthält.

## Claims

1. Two-component system (2C system) in the form of a two-component dispersion adhesive system, wherein the two-component system comprises two components (A) and (B) separated from one another, i.e.
(A) at least a polymer dispersion in amounts of 80 to 99.9 wt .-%, based on the two-component system, on the one hand, and
(B) an isocyanate-based crosslinking component (hardening component) in amounts of 0.1 to 20 wt .-%, based on the two-component system for the polymer dispersion on the other,
wherein the isocyanate-based crosslinking component (B) comprises a mixture of at least an aliphatic isocyanate selected from aliphatic di- and poly-isocyanates, and at least an aromatic isocyanate selected from aromatic di- and poly-isocyanates, wherein the isocyanate-based crosslinking component (B) contains aliphatic isocyanate(s) on the one hand and aromatic isocyanate(s) on the other, in a weight ratio of aliphatic isocyanate(s)/aromatic isocyanate(s) in the range of 15: 85 to 60: 40.

2. Two-component system according to claim 1, **characterised in that** the aliphatic isocyanate is selected from the group consisting of hexamethylene diisocyanate (HDI or HMDI) and its derivatives, isomers and oligomers, in particular HMDI trimer; 1-isocyanato-3-isocyanato-methyl-3,5,5-trimethylcyclohexane (IPDI) and its derivatives, isomers and oligomers, in particular di-, tri- and polymers and IPDI isocyanurate (IPDI-T); as well as mixtures and prepolymers of the aforementioned compounds, particularly preferably from the group consisting of HMDI and HMDI trimers.

3. Two-component system according to one or more of the preceding claims, **characterised in that** the aliphatic isocyanate is hydrophilised and/or that the aliphatic isocyanate is formed to be water-emulsifiable.

4. Two-component system according to one or more of the preceding claims, **characterised in that** the aromatic isocyanate is selected from the group of diisocyanatodiphenylmethanes (MDIs) and their derivatives, isomers and oligomers, in particular 4,4'-diisocyanatodiphenylmethane (4,4'-MDI) and 2,4'-diisocyanatodiphenylmethane (2,4'-MDI) and mixtures of various diisocyanatodiphenylmethane isomers; 1,5-diisocyanatonaphthalene (NDI); diisocyanatotoluenes (TDIs) and their derivatives, isomers and oligomers, in particular 2,4-diisocyanatotoluene and TDI uretdiones, especially dimeric 1-methyl-2,4-phenylene diisocyanate (TDI-U), and TDI ureas; 3,3'-dimethylbiphenyl-4,4'-diisocyanate (TODI); 3,3'-diisocyanato-4,4'-dimethyl-N, N'-diphenylurea (TDIH); as well as mixtures and prepolymers of the aforementioned compounds, particularly preferably from the group of MDIs, and mixtures of various MDI isomers.

5. Two-component system according to one or more of the preceding claims, **characterised in that** the aromatic isocyanate is a mixture of various MDI isomers, especially a mixture of 4,4'-diisocyanatodiphenylmethane and 2,4'-diisocyanatodiphenylmethane, preferably with a content of 2,4'-diisocyanatodiphenylmethane of at least 10 wt .-%, in particular at least 20 wt .-%, preferably at least 30 wt .-%, particularly preferably at least 40 wt.-%, based on the MDI isomer mixture.

6. Two-component system according to one or more of the preceding claims, **characterised in that** the isocyanate-based crosslinking component (B) comprises HMDI or its derivatives or IPDI, preferably HMDI or its derivatives, as the aliphatic isocyanate on the one hand, and at least one MDI, preferably a mixture of 4.4'-MDI and 2,4'-MDI as the aromatic isocyanate on the other.

7. Two-component system according to one or more of the preceding claims, **characterised in that** the two-component system contains the isocyanate-based crosslinking component (B) in amounts of 1 to 15 wt .-%, preferably 1 to 10 wt .-%, particularly preferably 2 to 7.5 wt .-%, based on the two-component system, and/or **in that** the isocyanate-based crosslinking component (B) contains aliphatic isocyanate(s) on the one hand, and aromatic isocyanate(s) on the other, in a weight ratio of aliphatic isocyanate(s)/aromatic isocyanate(s) in the range of 20: 80 to 50: 50.

8. Two-component system according to one or more of the preceding claims, **characterised in that** the weight ratio of aliphatic isocyanate(s)/aromatic isocyanate(s) is at most 1.5, preferably at most 1.

9. Two-component system according to one or more of the preceding claims, **characterised in that** the two-component system is a two component aqueous-based dispersion adhesive system.

10. Two-component system according to one or more of the preceding claims, **characterised in that** the polymer dispersion (A) is an aqueous-based plastic dispersion or a mixture of various aqueous-based polymer dispersions and/or **in that** the polymer dispersion (A) is selected from the group of polyurethane dispersions, acrylic dispersions, chloroprene dispersions, epoxy resin, ethylene vinyl acetate dispersions (EVA dispersions) and polyvinyl acetate dispersions (PVAc dispersions), as well as mixtures of two or more of the above dispersions and preferably in particular an aqueous-based polyurethane dispersion.

11. Two-component system according to one or more of the preceding claims, **characterised in that** the two-component system contains the polymer dispersion (A) in amounts from 85 to 99 wt .-%, preferably from 90 to 99 wt .-%, particularly preferably from 92.5 to 98 wt .-%, based on the two-component system.

12. Two-component system according to one or more of the preceding claims, **characterised in that** the two-component system and/or the polymer dispersion (A) further contains at least one additive, in particular selected from the group of emulsifiers, dispersing agents, solvents, stabilisers, thickeners, protective colloids, processing aids and mixtures thereof.

13. Use of a two-component system according to one or more of the preceding claims in the wood and furniture industry or in the automobile industry.

14. Use of a two-component system according to one or more of the preceding claims for film lamination onto substrates, especially for the lamination of thermoplastic films onto wooden materials, preferably in a vacuum thermoforming process (3D-deformation).

15. Use of a two-component system according to one or more of the preceding claims for application by spraying, rolling, pouring or dipping methods, preferably by spraying.

16. Method for crosslinking a polymer dispersion as a component of a two component system (2C system) in the form of a two-component dispersion adhesive system, wherein an isocyanate-based crosslinking component (hardening component) is added to the polymer dispersion, wherein the polymer dispersion is added in amounts of 80 to 99.9 wt .-% based on the two-component system, and the isocyanate-based crosslinking component (hardening component) is added in amounts of 0.1 to 20 wt .-% based on the two-component system, wherein a mixture of at least one aliphatic isocyanate selected from aliphatic di- and poly-isocyanates and at least an aromatic isocyanate selected from aromatic diisocyanates and polyisocyanates is used as the isocyanate-based crosslinking component, wherein the isocyanate-based crosslinking component (B) contains aliphatic isocyanate(s) on the one hand and aromatic isocyanate(s) on the other in a weight ratio of aliphatic isocyanate(s)/aromatic isocyanate(s) in the range of 15: 85 to 60: 40.

17. Use of a mixture of at least one aliphatic isocyanate and at least one aromatic isocyanate and isocyanate-based crosslinking component (hardening component) for a polymer dispersion as part of a two-component system (2C system) in the form of a two-component dispersion adhesive system, in particular for increasing the ultimate strength of the adhesive bond, in particular with respect to the heat resistance and/or the moisture resistance, wherein the two-component system comprises two components (A) and (B) separated from one another, i.e.
(A) at least a polymer dispersion in amounts of 80 to 99.9 wt .-%, based on the two-component system, on the one hand, and
(B) an isocyanate-based crosslinking component (hardening component) in an amount of 0.1 to 20 wt .-%, based on the two-component system for the polymer dispersion on the other,
wherein the isocyanate-based crosslinking component (B) comprises a mixture of at least an aliphatic isocyanate selected from aliphatic di- and poly-isocyanates, and at least an aromatic isocyanate selected from aromatic diisocyanates and polyisocyanates, wherein the isocyanate-based crosslinking component (B) contains aliphatic isocyanate(s) on the one hand and aromatic isocyanate(s) on the other in a weight ratio of aliphatic isocyanate(s)/aromatic isocyanate(s) in the range of 15: 85 to 60: 40.

## Revendications

1. Système bicomposant (système 2K) sous forme d'un système adhésif en dispersion à deux composants, le système bicomposant comprenant, en tant que composants (A) et (B) présents séparément l'un de l'autre
(A) au moins une dispersion de polymère en des quantités de 80 à 99,9 % en poids, par rapport au système bicomposant, d'une part, et
(B) un composant réticulant à base d'un isocyanate (composant durcisseur) en des quantités de 0,1 à 20 % en poids, par rapport au système bicomposant, pour la dispersion de polymère, d'autre part,
dans lequel le composant réticulant (B) à base d'un isocyanate comprend un mélange d'au moins un isocyanate aliphatique choisi parmi les di- et les polyisocyanates aliphatiques, et d'au moins un isocyanate aromatique, choisi parmi les di- et les polyisocyanates aromatiques, le composant réticulant (B) à base d'un isocyanate contenant un ou plusieurs isocyanates aliphatiques d'une part et un ou plusieurs isocyanates aromatiques d'autre part, selon un rapport en poids entre le ou les isocyanates aliphatiques et le ou les isocyanates aromatiques compris dans la plage de 15:85 à 60:40.

2. Système bicomposant selon la revendication 1, **caractérisé en ce que** l'isocyanate aliphatique est choisi dans le groupe consistant en le diisocyanate d'hexaméthylène (HDI ou HMDI) ou ses dérivés, isomères et oligomères, en particulier les trimères de HMDI ; le 1-isocyanato-3-isocyanato-méthyl-3,5,5-triméthyl-cyclohexane (IPDI) et ses dérivés, isomères et oligomères, en particulier les di-, tri- et polymères et l'isocyanurate d'IPDI (IPDI-T) ; ainsi que les mélanges et prépolymères des composés mentionnés ci-dessus, d'une manière particulièrement préférée dans le groupe consistant en le HMDI et les trimères de HMDI.

3. Système bicomposant selon l'une ou plusieurs des revendications précédentes, **caractérisé en ce que** l'isocyanate aliphatique est hydrophilisé, et/ou que l'isocyanate aliphatique est conçu de façon à être émulsifiable à l'eau.

4. Système bicomposant selon l'une ou plusieurs des revendications précédentes, **caractérisé en ce que** l'isocyanate aromatique est choisi dans le groupe consistant en les diisocyanatodiphénylméthanes (MDI) et leurs dérivés, isomères et oligomères, en particulier le 4,4'-diisocyanatodiphénylméthane (4,4'-MDI) et le 2,4'-diisocyanatodiphénylméthane (2,4'-MDI), ainsi que les mélanges de différents isomères du diisocyanatodiphénylméthane ; le 1,5-diisocyanatonaphtalène (NDI) ; les diisocyanatotoluènes (TDI) et leurs dérivés, isomères et oligomères, en particulier le 2,4-diisocyanatotoluène et les TDI-uretdiones, en particulier le diisocyanate de 1-méthyl-2,4-phénylène (TDI-U) dimère, et les TDI-urées ; le 4,4'-diisocyanate de 3,3'-diméthylbiphényle (TODI) ; la 3,3'-diisocyanato-4,4'-diméthyl-N,N'-diphénylurée (TDIH) ; ainsi que les mélanges et prépolymères des composés mentionnés ci-dessus, d'une manière particulièrement préférée dans le groupe consistant en les MDI et les mélanges de différents isomères de MDI.

5. Système bicomposant selon l'une ou plusieurs des revendications précédentes, **caractérisé en ce que** l'isocyanate aromatique est un mélange de différents isomères de MDI, en particulier un mélange de 4,4'-diisocyanatodiphénylméthane et de 2,4'-diisocyanatodiphénylméthane, avec de préférence une teneur en 2,4'-diisocyanatodiphénylméthane d'au moins 10 % en poids, en particulier d'au moins 20 % en poids, de préférence d'au moins 30 % en poids, d'une manière particulièrement préférée d'au moins 40 % en poids, par rapport au mélange d'isomères de MDI.

6. Système bicomposant selon l'une ou plusieurs des revendications précédentes, **caractérisé en ce que** le composant réticulant (B) à base d'un isocyanate comprend du HMDI ou ses dérivés ou de l'IPDI, de préférence du HMDI ou ses dérivés, en tant qu'isocyanate aliphatique, d'une part, et au moins un MDI, de préférence un mélange de 4,4'-MDI et de 2,4'-MDI, en tant qu'isocyanate aromatique, d'autre part.

7. Système bicomposant selon l'une ou plusieurs des revendications précédentes, **caractérisé en ce que** le système bicomposant contient le composant réticulant (B) à base d'un isocyanate en des quantités de 1 à 15 % en poids, de préférence de 1 à 10 % en poids, d'une manière particulièrement préférée de 2 à 7,5 % en poids, par rapport au système bicomposant, et/ou que le composant réticulant (B) à base d'un isocyanate contient un ou plusieurs isocyanates aliphatiques d'une part, et un ou plusieurs isocyanates aromatiques d'autre part, selon un rapport entre le ou les isocyanates aliphatiques et le ou les isocyanates aromatiques compris dans la plage de 20:80 à 50:50.

8. Système bicomposant selon l'une ou plusieurs des revendications précédentes, **caractérisé en ce que** le rapport en poids entre le ou les isocyanates aliphatiques et le ou les isocyanates aromatiques est d'au plus 1,5, de préférence d'au plus 1.

9. Système bicomposant selon l'une ou plusieurs des revendications précédentes, **caractérisé en ce que** le système bicomposant est un système d'adhésif bicomposant en dispersion à base aqueuse.

10. Système bicomposant selon l'une ou plusieurs des revendications précédentes, **caractérisé en ce que** la dispersion de polymère (A) est une dispersion d'un matériau plastique à base aqueuse ou un mélange de plusieurs dispersions de matériaux plastiques à base aqueuse, et/ou que la dispersion de polymère (A) est choisie dans le groupe consistant en les dispersions de polyuréthanne, les dispersions d'acrylate, les dispersions de chloroprène, les dispersions de résine époxyde, les dispersions d'éthylène-acétate de vinyle (dispersions EVA) et les dispersions de poly(acétate de vinyle) (dispersions PVAC), ainsi que les mélanges de deux ou plusieurs des dispersions mentionnées ci-dessus, et de préférence est en particulier une dispersion de polyuréthanne à base aqueuse.

11. Système bicomposant selon l'une ou plusieurs des revendications précédentes, **caractérisé en ce que** le système bicomposant contient la dispersion de polymère (A) en des quantités de 85 à 99 % en poids, de préférence de 90 à 99 % en poids, d'une manière particulièrement préférée de 92,5 à 98 % en poids, par rapport au système bicomposant.

12. Système bicomposant selon l'une ou plusieurs des revendications précédentes, **caractérisé en ce que** le système bicomposant et/ou la dispersion de polymère (A) contiennent en outre au moins un additif, en particulier choisi dans le groupe consistant en les émulsifiants, les dispersants, les solvants, les stabilisants, les épaississants, les colloïdes protecteurs, les auxiliaires de mise en oeuvre et les mélanges de ceux-ci.

13. Utilisation d'un système bicomposant selon l'une ou plusieurs des revendications précédentes dans l'industrie du bois et des meubles, ou dans l'industrie automobile.

14. Utilisation d'un système bicomposant selon l'une ou plusieurs des revendications précédentes pour le contrecollage de feuilles sur des substrats, en particulier pour le contrecollage de feuilles thermoplastiques sur des matériaux à base de bois, de préférence par le procédé de formage sous vide (formage 3D).

15. Utilisation d'un système bicomposant selon l'une ou plusieurs des revendications précédentes pour une utilisation dans un procédé par injection, au rouleau, par coulée ou au trempé, de préférence dans un procédé par injection.

16. Procédé de réticulation d'une dispersion de polymère, en tant que constituant d'un système bicomposant (système 2K) sous forme d'un système d'adhésif bicomposant en dispersion, dans lequel la dispersion de polymère est additionnée d'un composant réticulant (composant durcisseur) à base d'un isocyanate, la dispersion de polymère étant utilisée en des quantités de 80 à 99,9 % en poids, par rapport au système bicomposant, et le composant réticulant (composant durcisseur) à base d'un isocyanate en des quantités de 0,1 à 20 % en poids, par rapport au système bicomposant, dans lequel en tant que composant réticulant à base d'un isocyanate on utilise un mélange d'au moins un isocyanate aliphatique, choisi parmi les di- et les polyisocyanates aliphatiques, et d'au moins un isocyanate aromatique, choisi parmi les di- et les polyisocyanates aromatiques, le composant réticulant (B) à base d'un isocyanate contenant un ou plusieurs isocyanates aliphatiques d'une part et un ou plusieurs isocyanates aromatiques d'autres part, selon un rapport en poids entre le ou les isocyanates aliphatiques et le ou les isocyanates aromatiques compris dans la plage de 15:85 à 60:40.

17. Utilisation d'un mélange d'au moins un isocyanate aliphatique et d'au moins un isocyanate aromatique en tant que composant réticulant (composant durcisseur) à base d'un isocyanate pour une dispersion de polymère dans le cadre d'un système bicomposant (système 2K) sous forme d'un système d'adhésif bicomposant en dispersion, en particulier pour augmenter la résistance finale du collage, en particulier pour ce qui concerne la résistance à la chaleur et/ou la résistance à l'humidité, le système bicomposant comprenant, en tant que composants (A) et (B) présents séparément l'un de l'autre
(A) au moins une dispersion de polymère en des quantités de 80 à 99,9 % en poids, par rapport au système bicomposant, d'une part, et
(B) un composant réticulant à base d'un isocyanate (composant durcisseur) en des quantités de 0,1 à 20 % en poids, par rapport au système bicomposant, pour la dispersion de polymère, d'autre part,
dans lequel le composant réticulant (B) à base d'un isocyanate comprend un mélange d'au moins un isocyanate aliphatique choisi parmi les di- et les polyisocyanates aliphatiques, et d'au moins un isocyanate aromatique, choisi parmi les di- et les polyisocyanates aromatiques, le composant réticulant (B) à base d'un isocyanate contenant un ou plusieurs isocyanates aliphatiques d'une part et un ou plusieurs isocyanates aromatiques d'autre part, selon un rapport en poids entre le ou les isocyanates aliphatiques et le ou les isocyanates aromatiques compris dans la plage de 15:85 à 60:40.
